# EUROPÄISCHE PATENTSCHRIFT

(11) **EP 3 740 827 B1**
(45) Veröffentlichungstag und Bekanntmachung des Hinweises auf die Patenterteilung: **07.06.2023**
(21) Anmeldenummer: 19701986.2
(22) Anmeldetag: 09.01.2019
(51) Int. Cl.: G05B 19/042, G05B 23/02, B65B 37/10, B65B 57/14, B65B 57/16, B65B 59/00, B65B 65/02, H02P 29/032

(54) **VERFAHREN ZUM BETRIEB EINER VERPACKUNGSMASCHINE**
METHOD FOR OPERATING A PACKAGING MACHINE
PROCÉDÉ POUR FAIRE FONCTIONNER UNE MACHINE D'EMBALLAGE

(30) Priorität: 19.01.2018 DE 102018101180
(43) Veröffentlichungstag der Anmeldung: 25.11.2020
(73) Patentinhaber: Rovema GmbH, 35463 Fernwald (DE)
(72) Erfinder: DERSCH, Volker, 35305 Gruenberg (DE); TREPKE, Peter, 36329 Romrod (DE)
(74) Vertreter: advotec.
(86) Internationale Anmeldenummer: PCT/EP2019/050447
(87) Internationale Veröffentlichungsnummer: WO 2019/141566

(56) Entgegenhaltungen:
- EP-A1- 1 168 591
- EP-A1- 3 046 250
- DE-A1-102013 207 363
- US-A- 5 587 931

## Beschreibung

Die Erfindung betrifft ein Verfahren zum Betrieb einer Verpackungsmaschine nach dem Oberbegriff des Anspruchs 1.

Eine gattungsgemäße Verpackungsmaschine ist beispielsweise aus der DE 10 2010 028 697 A1 bekannt. Diese Verpackungsmaschine umfasst insbesondere einen Antriebsmotor, mit dem eine Funktionseinheit, nämlich eine Förderschnecke angetrieben werden kann. Bei gattungsgemäßen Verpackungsmaschinen ist in der Steuerung ein Parametersatz mit einem Lastschutzparameter hinterlegt, der das vom Motor maximal aufbringbare Drehmoment bzw. den vom Antriebsmotor maximal aufzunehmenden Strom begrenzt. Durch den Lastschutzparameter wird eine Überlastung des Antriebsmotors, wie sie beispielsweise beim Blockieren der Förderschnecke auftreten könnte, ausgeschlossen.

Eine weitere Verpackungsmaschine ist beispielsweise aus DE 10 2013 207 363 A1 bekannt. Eine Leistungsbegrenzung eines Elektromotors durch einen Parameter ist beispielsweise aus EP 1 168 691 A1 oder aus EP 3 046 250 A1 bekannt.

Bei den bekannten Verpackungsmaschinen ist es ein Problem, dass mit den Verpackungsmaschinen unterschiedlichste Verpackungen hergestellt werden. Abhängig von der jeweils herzustellenden Verpackung kann dann die Funktionseinheit, die mit einem Antriebsmotor angetrieben wird, umgebaut werden. Werden beispielsweise kleinere Verpackungen befüllt und versiegelt, so wird die entsprechende Förderschnecke mit einem geringeren Format eingebaut. Problematisch ist es dabei, dass der Lastschutzparameter, der die maximale Stromaufnahme bzw. das maximale Drehmoment des jeweiligen Antriebsmotors begrenzt, unverändert bleibt. Kommt es nun an der Funktionseinheit zu einer Funktionsstörung, beispielsweise durch Verpacken des mit der Förderschnecke zu fördernden Pulvers, so wird die mit dem Lastschutzparameter programmierte Begrenzung der vom Antriebsmotor aufzubringenden Leistung erst dann erreicht, wenn bereits erhebliche Beschädigungen an der entsprechenden Funktionseinheit, beispielsweise durch Herausdrehen der entsprechenden kleinen Förderschnecke, aufgetreten sind.

Ausgehend von diesem Stand der Technik ist es Aufgabe der vorliegenden Erfindung ein neues Verfahren zum Betrieb einer Verpackungsmaschine vorzuschlagen, mit dem die oben beschriebenen Nachteile vermieden werden.

Vorteilhafte Ausführungsformen der Erfindung sind Gegenstand der Unteransprüche.

Bei dem erfindungsgemäßen Verfahren wird zunächst wie üblich ein Parametersatz mit einem Lastschutzparameter geladen, der das Drehmoment oder die Stromaufnahme des Motors bei der Herstellung einer bestimmten Verpackung auf ein vordefiniertes Maximum begrenzt. Dieses vordefinierte Maximum der Leistungsaufnahme, die durch den Lastschutzparameter repräsentiert wird, kann sich insbesondere daran orientieren, dass eine Überlastung des Antriebsmotors selbst ausgeschlossen ist.

Anschließend wird die Verpackungsmaschine in Betrieb gesetzt und die jeweiligen Verpackungen mit den entsprechend notwendigen Funktionseinheiten der Verpackungsmaschine hergestellt. Während des Betriebs der Verpackungsmaschine zur Herstellung der Verpackung wird der maximal auftretende Ist-Wert des am Motor auftretenden Drehmoments bzw. der maximal auftretende Ist-Wert der am Motor auftretenden Stromaufnahme gemessen. Handelt es sich um entsprechend kleine Verpackungen, wird dieser maximal auftretende Ist-Wert üblicherweise signifikant unterhalb des bisher voreingestellten Lastschutzparameters liegen.

Im nächsten Schritt wird dann aus dem gemessenen Ist-Wert des maximal aufgetretenen Drehmoments bzw. der maximal aufgetretenen Stromaufnahme ein neuer Lastschutzparameter berechnet. Dieser neue Lastschutzparameter repräsentiert dann gerade die Grenze der Leistungsaufnahme des Antriebsmotors, die im ungestörten Normalbetrieb der Verpackungsmaschine bei der Herstellung der entsprechenden Verpackungen aufgewendet werden muss. Der neue Lastschutzparameter kann dann selbstverständlich etwas oberhalb der gemessenen Ist-Werte bestimmt werden, um ungewollte Störmeldungen bei Überschreiten eines zu eng gewählten Lastschutzparameters zu vermeiden.

Zuletzt wird der neue Lastschutzparameter, der aus den gemessenen Ist-Werten der maximal aufgetretenen Drehmomente bzw. der maximal aufgetretenen Stromaufnahme abgeleitet ist, in einem der herzustellenden Verpackungen spezifisch zugeordneten Parametersatz abgespeichert. Während des weiteren Betriebs der Verpackungsmaschine kann dann immer, wenn eine entsprechende Verpackung mit der Verpackungsmaschine hergestellt werden soll, der spezifisch zugeordnete Parametersatz in die Steuerung der Verpackungsmaschine geladen und dadurch Beschädigungen nicht nur des Antriebsmotors sondern auch der mit dem Antriebsmotor angetriebenen Funktionseinheit problemlos ausgeschlossen werden.

Die bei der Herstellung einer Verpackung maximal aufgetretene Stromaufnahme bzw. das bei der Herstellung einer Verpackung maximal aufgetretene Drehmoment kann innerhalb bestimmter Toleranzgrenzen streuen. Um solche Streueffekte bei der Bestimmung des neuen Lastschutzparameters berücksichtigen zu können, ist es besonders vorteilhaft, wenn der neue Lastschutzparameter nach Herstellung einer vorgegebenen Mindestanzahl von Verpackungen und der entsprechenden Messung der dabei aufgetretenen maximalen Ist-Werte bestimmt wird. Aus den verschiedenen maximalen Ist-Werten kann dann ein Durchschnittswert zur Bestimmung des neuen Lastschutzparameters genutzt werden. Alternativ dazu ist es auch denkbar, den größten der gemessenen maximalen Ist-Werte zur Bestimmung des neuen Lastschutzparameters zu nutzen.

Für die Weiterverwendung des neuen Lastschutzparameters gibt es unterschiedliche Vorgehensstrategien. Gemäß einer ersten Verfahrensvariante wird nach Bestimmung eines neuen Lastschutzparameters zu einer bestimmten Verpackung der alte Lastschutzparameter automatisch überschrieben.

Alternativ zu der automatischen Überschreibung des alten Lastschutzparameters kann die Verwendung des neuen Lastschutzparameters auch davon abhängig gemacht werden, dass das Überschreiben des alten Lastschutzparameters mit dem neuen Lastschutzparameter erst nach Bestätigung einer entsprechenden Meldung durch den Bediener erfolgt.

In welcher Weise der neue Lastschutzparameter in Abhängigkeit des gemessenen Ist-Werts bestimmt wird, ist grundsätzlich beliebig. Ohne Weiteres können dazu bekannte Berechnungsformeln eingesetzt werden. Eine besonders einfache und leicht verständliche Berechnungsformel liegt in der Verwendung einer linearen Formel F (neuer Lastschutzparameter) = f (maximaler Ist-Wert).

Gemäß einer bevorzugten Ausführungsvariante ist es vorgesehen, dass der neue Lastschutzparameter als Prozentualwert des maximal gemessenen Ist-Werts berechnet wird. Bevorzugt kann der neue Lastschutzparameter 110 % oder 120 % oder 130 % oder 140 % oder 150 % des maximal gemessenen Ist-Werts sein.

Wird bei der Herstellung einer Verpackung der neu gespeicherte Lastschutzparameter überschritten, so können damit unterschiedliche Reaktionen ausgelöst werden. Gemäß einer ersten Variante wird bei Überschreiten eines ersten Lastschutzparameters eine Warnmeldung ausgegeben. Überschreitet der gemessene Ist-Wert beispielsweise einen Lastschutzparameter von 110 % des erfindungsgemäß gemessenen maximalen Ist-Werts, so wird dem Bediener zunächst eine Warnmeldung angezeigt, die auf ein mögliches Problem aufgrund der erhöhten Belastung hinweist.

Gemäß einer zweiten Verfahrensalternative ist es vorgesehen, dass bei Überschreiten eines zweiten Lastschutzparameters, beispielsweise von 130 % des mit dem erfindungsgemäßen Verfahren maximal gemessenen Ist-Werts eine Störmeldung ausgegeben wird.

Gemäß einer dritten Verfahrensalternative kann bei Überschreiten des vierten Lastschutzparameters, beispielsweise von 150 % des mit dem erfindungsgemäßen Verfahrens maximal gemessenen Ist-Werts ein Not-Aus-Signal ausgegeben werden, um die Maschine automatisch zu stoppen und Beschädigungen in den mechanischen Funktionseinheiten durch unerwünschte Überlastungen auszuschließen.

Eine Ausführungsform der Erfindung ist in den Zeichnungen schematisiert dargestellt und wird nachfolgend beispielhaft erläutert.

Es zeigen:
- **Fig. 1**: eine schematisiert dargestellte Verpackungsmaschine mit einer von einem Antriebsmotor angetriebenen Förderspindel;
- **Fig. 2**: ein schematisiert dargestelltes Messdiagramm zur Darstellung des gemessenen Ist-Drehmoments des Antriebsmotors;
- **Fig. 3**: ein Messdiagramm gemäß Fig. 2 nach Bestimmung eines neuen Lastschutzparameters.

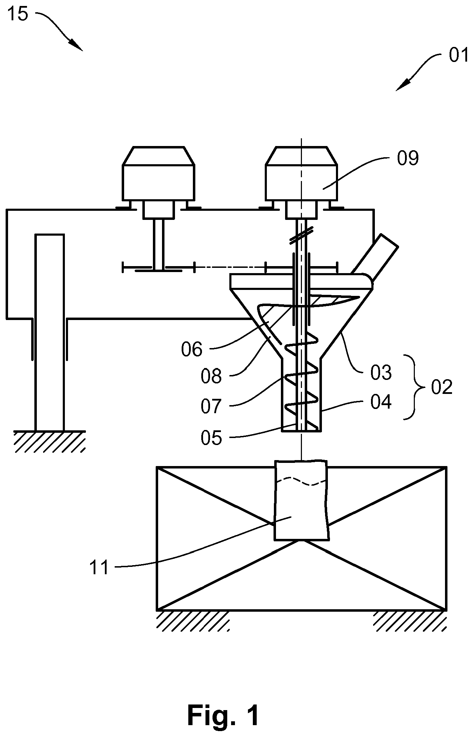

In **Fig. 1** ist eine Dosiervorrichtung 01 skizziert, die Teil einer Verpackungsmaschine 15 ist. Hierbei weist die Dosiervorrichtung 01 ein Abgabebehältnis 02 auf, welches aus einem Trichter 03 und einem daran anschließenden Rohr 04 besteht. Daran angeordnet befindet sich ein Rührer 06 sowie eine Dosierschnecke 05. Wie in der Skizze zu erkennen ist, weisen Trichter 03, Rohr 04 sowie Rührer 06 und Dosierschnecke 05 eine gemeinsame Mittelachse auf.

Zwischen dem Rührer 06 und dem Trichter 03 ist ein Spalt 08 vorgesehen. Dieser wird funktionsgemäß möglichst klein gewählt, jedoch groß genug, um einen Kontakt zwischen dem Rührer 06 und dem Trichter 03 zu verhindern. Gleiches gilt für den Spalt 07 zwischen dem Rohr 04 und der Dosierschnecke 05.

Dennoch ist bei Wahl eines geringen Spalts 07 bzw. 08 eine Kollision der entsprechenden Teile nicht auszuschließen.

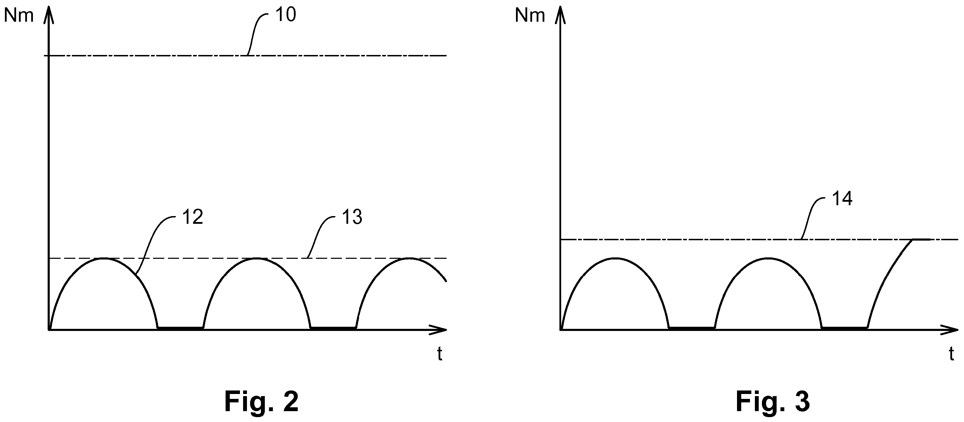

Die Förderschnecke 05 wird mit einem Antriebsmotor 09 angetrieben. Für diesen Antriebsmotor 09 ist in der Steuerung der Verpackungsmaschine 15 ein Lastschutzparameter 10 (siehe Fig. 2) abgespeichert, der eine Beschädigung des Antriebsmotors 09 durch Überlastung verhindern soll.

**Fig. 2** zeigt das Messdiagramm zur Messung vom Antriebsmotor 09 aufgebrachtem Drehmoment, das auf die Förderspindel 05 wirkt, während der Herstellung von Verpackungen 11. Der bei der Herstellung der Verpackungen 11 aufzubringende Ist-Wert 12 des Drehmoments steigt periodisch bis zu einem Maximal-Wert 13 an und fällt dann wieder auf den Null-Wert zurück. Mit jeder neuen Verpackung 11 wird ein neuer Wertzyklus des an der Förderspindel 05 aufgebrachten Drehmoments durchlaufen.

Man erkennt, dass der maximale Ist-Wert 13 des vom Antriebsmotor 09 aufgebrachten Drehmoments erheblich unterhalb des in der Steuerung hinterlegten Lastschutzparameters 10 liegt. Würde das Ist-Drehmoment 12 bei einer Störung, beispielsweise beim Verpacken des zu fördernden Pulvers, über den im Normalbetrieb erreichten Maximal-Wert 13 ansteigen, so würde eine Störung durch die Steuerung erst bei Erreichen des Lastschutzparameters 10 erkannt, wobei in diesem Fall dann bereits erhebliche mechanische Beschädigungen an der Förderschnecke aufgetreten sein würden.

Um solche Beschädigungen auszuschließen, wird der im Normalbetrieb gemessene Maximal-Wert 13 zur Bestimmung eines neuen Lastschutzparameters 14 genutzt.

Wie in **Fig. 3** dargestellt, liegt der neue Lastschutzparameter 14 bei 110 % des im Normalbetrieb gemessenen Maximal-Werts 13 des vom Antriebsmotor 09 aufgebrachten Drehmoments. Dies bedeutet mit anderen Worten, dass diese Leistungsschwelle im Normalbetrieb bei der Herstellung der Verpackungen 11 nicht überschritten wird. Überschreitet, wie in Fig. 3 beispielhaft dargestellt, der Ist-Wert 12 den neuen Lastschutzparameter 14, so kann eine Warnmeldung, eine Störmeldung oder ein Not-Aus-Signal abgesetzt werden. Der neue Lastschutzparameter 14 wird nach entsprechender Bestätigung durch das Bedienpersonal im Parametersatz, der der Verpackung 11 zugeordnet ist, abgespeichert und überschreibt den alten Lastschutzparameter 10.

## Patentansprüche

1. Verfahren zum Betrieb einer Verpackungsmaschine (15) mit zumindest einem elektrischen Antriebsmotor (09), wobei der Antriebmotor (09) zumindest eine Funktionseinheit (05) der Verpackungsmaschine (15) bei der Herstellung von Verpackungen (11) programmgesteuert antreibt mit folgenden Verfahrensschritten:
a) Laden eines Parametersatzes in die Steuerung der Verpackungsmaschine (15), wobei der Parametersatz zumindest einen alten Lastschutzparameter (10) enthält, der das Drehmoment oder die Stromaufnahme des Antriebsmotor (09) bei der Herstellung der Verpackungen (11) auf ein Maximum begrenzt;
b) Betrieb der Verpackungsmaschine (15) unter Herstellung der Verpackung (11), wobei während des Betriebs der maximal auftretende Ist-Wert (13) des am Antriebsmotor (09) auftretenden Drehmoments oder der am Antriebsmotor (09) auftretenden Stromaufnahme gemessen wird;
**gekennzeichnet durch** die folgenden Verfahrensschritte:
c) Bestimmung eines neuen Lastschutzparameters (14) in Abhängigkeit des maximalen Ist-Wertes;
d) Speicherung des neuen Lastschutzparameters (14) in einem der herzustellenden Verpackung (11) zugeordneten Parametersatz.

2. Verfahren nach Anspruch 1,
**dadurch gekennzeichnet,**
**dass** der neue Lastschutzparameter (14) nach Herstellung einer vorgegebenen Mindestanzahl von Verpackung bestimmt wird.

3. Verfahren nach Anspruch 1 oder 2,
**dadurch gekennzeichnet,**
**dass** der alte Lastschutzparameter (13) automatisch mit dem neuen Lastschutzparameter (14) überschrieben wird.

4. Verfahren nach Anspruch 1 oder 2,
**dadurch gekennzeichnet,**
**dass** der alte Lastschutzparameter (13) nach Bestätigung einer entsprechenden Meldung durch den Bediener mit dem neuen Lastschutzparameter (14) überschrieben wird.

5. Verfahren nach einem der Ansprüche 1 bis 4,
**dadurch gekennzeichnet,**
**dass** der neue Lastschutzparameter (14) mit einer linearen Formel in Abhängigkeit vom maximalen Ist-Wert (13) berechnet wird.

6. Verfahren nach Anspruch 5,
**dadurch gekennzeichnet,**
**dass** der neue Lastschutzparameter (14) 110 % oder 120 % oder 130 % oder 140 % oder 150 % des maximalen Ist-Werts (13) entspricht.

7. Verfahren nach einem der Ansprüche 1 bis 6,
**dadurch gekennzeichnet,**
**dass** bei Überschreiten eines ersten Lastschutzparameters während des Betriebs der Verpackungsmaschine (15) eine Warnmeldung ausgegeben wird.

8. Verfahren nach einem der Ansprüche 1 bis 7,
**dadurch gekennzeichnet,**
**dass** bei Überschreiten eines zweiten Lastschutzparameters während des Betriebs der Verpackungsmaschine (15) eine Störmeldung ausgegeben wird.

9. Verfahren nach einem der Ansprüche 1 bis 8,
**dadurch gekennzeichnet,**
**dass** bei Überschreiten eines dritten Lastschutzparameters während des Betriebs der Verpackungsmaschine (15) ein Not-Aus-Signal ausgegeben wird.

## Claims

1. A method for operating a packaging machine (15) having at least one electric drive motor (09), the drive motor (09) driving at least one functional unit (05) of the packaging machine (15) in a program-controlled manner when producing packaging (11) using the following steps:
a) loading a parameter set into the controller of the packaging machine (15), the parameter set containing at least one old load parameter (10) which limits the torque or the current consumption of the drive motor (09) to a maximum when producing packaging (11);
b) operating the packaging machine (15) for producing packaging (11), the maximally occurring actual value (13) of the torque mustered at the drive motor (09) or of the current consumed by the drive motor (09) being measured during operation;
**characterized by** the following method steps:
c) determining a new load parameter (14) as a function of the maximum actual value;
d) saving the new load parameter (14) in a parameter set allocated to the packaging (11) to be produced.

2. The method according to claim 1,
**characterized in that**
the new load parameter (14) is determined after a predetermined minimum number of packaging has been produced.

3. The method according to claim 1 or 2,
**characterized in that**
the old load parameter (13) is automatically overwritten by the new load parameter (14).

4. The method according to claim 1 or 2,
**characterized in that**
the old load parameter (13) is overwritten by the new load parameter (14) after the user has affirmed a corresponding notification.

5. The method according to any one of the claims 1 to 4,
**characterized in that**
the new load parameter (14) is calculated using a linear formula as a function of the maximum actual value (13).

6. The method according to claim 5,
**characterized in that**
the new load parameter (14) corresponds to 110 % or 120 % or 130 % or 140 % or 150 % of the maximum actual value (13).

7. The method according to any one of the claims 1 to 6,
**characterized in that**
a warning is issued upon exceeding a first load parameter during operation of the packaging machine (15).

8. The method according to any one of the claims 1 to 7,
**characterized in that**
an error message is issued upon exceeding a second load parameter during operation of the packaging machine (15).

9. The method according to any one of the claims 1 to 8,
**characterized in that**
an emergency shutdown signal is issued upon exceeding a third load parameter during operation of the packaging machine (15).

## Revendications

1. Procédé pour l'opération d'une machine d'emballage (15) ayant au moins un moteur d'entrainement (09) électrique, le moteur d'entrainement (09) entrainant au moins une unité de fonction (05) de la machine d'emballage (15) de manière dirigée par un programme quand un emballage (11) est produit en utilisant les étapes suivantes :
a) charger un jeu de paramètres dans le contrôleur de la machine d'emballage (15), le jeu de paramètres contenant au moins un vieux paramètre de protection de surcharge (10) qui limite le torque ou le courant absorbé du moteur d'entrainement (09) à un maximum quand l'emballage (11) est produit ;
b) opérer la machine d'emballage (15) pour produire l'emballage (11), la valeur réelle (13) se produisant maximalement du torque rassemblé au moteur d'entrainement (09) ou du courant absorbé rassemblé au moteur d'entrainement (09) étant mesurée pendant l'opération ;
**caractérisé par** les étapes de procédé suivantes :
c) déterminer un nouveau paramètre de protection de surcharge (14) en fonction de la valeur réelle maximale ;
d) stocker le nouveau paramètre de protection de surcharge (14) dans les jeux de paramètre assignés à l'emballage (11) à être produit.

2. Procédé selon la revendication 1,
**caractérisé en ce que**
le nouveau paramètre de protection de surcharge (14) est déterminée après un nombre minimum déterminé d'emballages a été produit.

3. Procédé selon la revendication 1 ou la revendication 2,
**caractérisé en ce que**
le vieux paramètre de protection de surcharge (13) est écrasé automatiquement par le nouveau paramètre de protection de surcharge (14).

4. Procédé selon la revendication 1 ou la revendication 2,
**caractérisé en ce que**
le vieux paramètre de protection de surcharge (13) est écrasé par le nouveau paramètre de protection de surcharge (14) après l'utilisateur a vérifié une notification correspondante.

5. Procédé selon l'une quelconque des revendications 1 à 4,
**caractérisé en ce que**
le nouveau paramètre de protection de surcharge (14) est compté en utilisant une formule linéaire en fonction d'une valeur réelle (13) maximal.

6. Procédé selon la revendication 5,
**caractérisé en ce que**
le nouveau paramètre de protection de surcharge (14) corresponde à 110 % ou 120 % ou 130 % ou 140 % ou 150 % de la valeur réelle (13) maximale.

7. Procédé selon l'une quelconque des revendications 1 à 6,
**caractérisé en ce**
**qu'**un message d'avertissement est émis quand un premier paramètre de protection de surcharge est surpassé pendant l'opération de la machine d'emballage (15).

8. Procédé selon l'une quelconque des revendications 1 à 7,
**caractérisé en ce**
**qu'**un signal de dérangement est émis quand une deuxième paramètre de protection de surcharge est surpassé pendant l'opération de la machine d'emballage (15).

9. Procédé selon l'une quelconque des revendications 1 à 8,
**caractérisé en ce**
**qu'**un signal de déclenchement d'urgence est émis quand un troisième paramètre de protection de surcharge est surpassé pendant l'opération de la machine d'emballage (15).
